# EUROPÄISCHE PATENTSCHRIFT

(11) **EP 0 862 810 B1**
(45) Veröffentlichungstag und Bekanntmachung des Hinweises auf die Patenterteilung: **10.10.2001**
(21) Anmeldenummer: 96946013.8
(22) Anmeldetag: 25.11.1996
(51) Int. Cl.: H02P 7/00, B66B 13/14

(54) **ANTRIEB FÜR EINE ELEKTRISCHE TÜR**
DRIVE UNIT FOR AN ELECTRIC DOOR
MECANISME D'ENTRAINEMENT POUR PORTE ELECTRIQUE

(30) Priorität: 24.11.1995 DE 29518646 U
(43) Veröffentlichungstag der Anmeldung: 09.09.1998
(73) Patentinhaber: SIEMENS AKTIENGESELLSCHAFT, 80333 München (DE)
(72) Erfinder: LUDWIG, Heinz, D-30823 Garbsen (DE); NOLTE, Uwe, D-30890 Barsinghausen (DE); SONNTAG, Guido, D-30989 Gehrden (DE); ROWEDDA, Volker, D-30982 Pattensen (DE)
(86) Internationale Anmeldenummer: DE9602264
(87) Internationale Veröffentlichungsnummer: WO9719245

(56) Entgegenhaltungen:
- EP-A- 0 170 641
- EP-A- 0 375 786
- EP-A- 0 384 788
- US-A- 3 902 573
- US-A- 4 376 471
- US-A- 4 545 464
- US-A- 5 175 400
- PATENT ABSTRACTS OF JAPAN vol. 014, no. 039 (M-924), 24.Januar 1990 & JP 01 271392 A (MITSUBISHI ELECTRIC CORP), 30.Oktober 1989,
- PATENT ABSTRACTS OF JAPAN vol. 016, no. 250 (M-1262), 8.Juni 1992 & JP 04 059587 A (MITSUBISHI ELECTRIC CORP), 26.Februar 1992,
- PATENT ABSTRACTS OF JAPAN vol. 016, no. 306 (M-1276), 6.Juli 1992 & JP 04 085282 A (MITSUBISHI ELECTRIC CORP), 18.März 1992,

## Beschreibung

Die Erfindung betrifft einen Antrieb für eine elektrische Tür, insbesondere eine Aufzugstür, mit einem Netztransformator, einem elektronischen, programmierbaren Steuergerät und einem Elektromotor mit Inkrementalgeber und Zähler.

Türantriebe, insbesondere Aufzugstürantriebe, mit den vorstehend genannten Komponenten sind bekannt. Bei den bekannten Antrieben sind der Netztransformator und der Motor derart aufeinander abgestimmt, daß die Ausgangsspannung des Netztransformators der Nennspannung des Motors entspricht. Der Netztransformator, das Steuergerät und der Motor sind derart dimensioniert, daß es bei Lastwechseln des Antriebs nicht zu wesentlichen Spannungsschwankungen kommt und die Tür nach einer vorgegebenen Fahrkurve bewegt werden kann.

Es ist die Aufgabe der Erfindung, ein neues Steuergerät für die Antriebe von elektrischen Türen, insbesondere von Aufzugstüren anzugeben, mit dem die bekannte Antriebskonfiguration - Netztransformator, Steuergerät, Motor - wesentlich kostengünstiger hergestellt und eingesetzt werden kann, ohne an Funktionalität zu verlieren.

Die Aufgabe wird dadurch gelöst, daß das Steuergerät derart als Stromwandler ausgebildet ist, daß in den für elektrische Türantriebe üblichen Leistungsgrößen, aus beliebig dimensionierten Netztransformatoren, beliebig dimensionierte Elektromotoren auch bei abweichenden Nennspannungen anforderungsgerecht mit Energie versorgbar sind.

Durch diese Ausbildung des Steuergeräts ist es sehr vorteilhaft möglich, mit nur einer, in Großserie kostengünstig her-Durch diese Ausbildung des Steuergeräts ist es sehr vorteilhaft möglich, mit nur einer, in Großserie kostengünstig herstellbaren, Steuergeräteausführung nach dem bekannten Stand der Türantriebstechnik nicht zusammenpassende Netztransformatoren und Motoren zu einem anforderungsgerecht arbeitenden Antrieb zu vereinigen. Im Rahmen der Leistungsgrößen von Türantriebskomponenten sind also die unterschiedlichsten Netztransformatoren mit den unterschiedlichsten Motoren kombinierbar. Dabei wird stets nur eine hardwaremäßig unverändert bleibende Steuergeräteausführung benötigt. Für das ordnungsgemäße Funktionieren dieser erfindungsgemäßen Türantriebe sorgt eine Kompensationssoftware.

In Ausgestaltung der Erfindung ist vorgesehen, daß das Steuergerät einen Microcontroller, insbesondere einen 8-Bit-Microcontroller aufweist, in dem ein Programm speicher- und ablaufbar ist, das auch bei Unterschreiten der Nennspannung der von dem Steuergerät angesteuerten. Elektromotoren für eine vorgabegerechte Bewegung der Tür sorgt. So ist die Erfindung vorteilhaft ausführbar. Es ergibt sich der weitere wesentliche Vorteil, daß auch relativ klein dimensionierte Netztransformatoren für relativ große Motoren verwendet werden können, da das erfindungsgemäße Steuergerät sowohl eine permanente Unterspannung des mit elektrischer Energie versorgten Motors kompensieren als auch vorübergehende Unterspannungen ausgleichen kann. Hierfür ist sehr vorteilhaft keine Hardwareanpassung notwendig.

In weiterer Ausgestaltung der Erfindung ist vorgesehen, daß das Steuergerät eine Pulsweitenmodulation PWM durchführend ausgebildet ist, so daß über eine Endstufe, die vorzugsweise eine H-Brücke aufweist, zusammen mit dem Inkrementalgeber und dem Zähler ein Regelkreis für die Türbewegung bildbar ist. So wird die anforderungsgerechte Türbewegung auch bei unterschiedlichen Spannungsverhältnissen möglich. Es wird ein sicherer, einfacher Regelkreis gebildet, über den eine ruckfreie, einer vorgegebenen Fahrkurve entsprechende Türbewegung auch bei unterschiedlichen Spannungsverhältnissen erhaltbar ist. Die Signale für die Türregelung werden vorteilhaft über ein Zusammenwirken eines ASIC mit dem Microcontroller gebildet. Der ASIC, der als wesentlichen Bestandteil eine integrierte Pulsweitenmodulationseinheit aufweist, die aus der allgemeinen Antriebstechnik bekannt ist und in großen Stückzahlen produziert wird, ist ebenso wie ein 8-Bit Microcontroller sehr preisgünstig. So ergibt sich ein insgesamt sehr preisgünstiges, trotzdem voll funktionsfähiges, den erfindungsgemäßen Zweck gut erfüllendes Steuergerät.

Zur besonders kostengünstigen Ausführung des Antriebs für eine elektrische Tür, insbesondere eine Aufzugstür, ist vorgesehen, daß der Netztransformator zumindest teilweise aus Standardkomponenten von Halogenlampen-Vorschlagtransformatoren besteht. Insbesondere die Primärwicklung, das Gehäuse und die Ein- und Ausgangssicherungen sind unverändert übernehmbar. Lediglich die Sekundärwicklung wird mit einer Windungszahl für eine Ausgangsspannung, die für den vorgesehenen Zweck besonders günstig ist, z.B. 24 V, versehen. Insgesamt ergibt sich ein Netztransformator, der im wesentlichen den kostengünstigen, in sehr großen Stückzahl hergestellten Halogenlampen-Vorschalttransformatoren entspricht. Der sich unter Last gegebenenfalls einstellende Spannungsabfall, der größer sein kann als bei speziell für elektrische Antriebe entworfenen Transformatoren, wird durch das erfindungsgemäße Steuergerät kompensiert. So ergibt sich eine insgesamt sehr günstige Ausführung des Antriebs, der bei gleicher Funktionalität deutlich kostengünstiger als alle bekannten Antriebe ist.

In weiterer, vorteilhafter Ausgestaltung der Erfindung ist vorgesehen, daß der Netztransformator eine Steckerverbindung zum Steuergerät aufweist, desgleichen, daß das Steuergerät eine Steckerverbindung zum Motor und dem Inkrementalgeber aufweist. So ist eine einfache, sichere und kostengünstige Verbindung des Netztransformators mit dem Steuergerät und des Steuergeräts mit dem Motor möglich, die eine Montage auch durch ungeübte Hilfskräfte zuläßt.

Erfindungsgemäß werden z.B. von dem aus den bekannten Halogenlampen-Vorschalttransformatoren abgeleiteten Transformator 24 V-, 30 V- oder 40 V-Motoren mit elektrischer Energie versorgt. Durch die Pulsweitenmodulation ist es sehr vorteilhaft möglich, daß die auf Dauer bestehenden Nennspannungsunterschiede ausgeglichen werden.

Das Steuergerät ist vorteilhaft über ein EEPROM parametrierbar und mit Signaleingängen für Steuersignale sowie mit Signalausgängen versehen. Hierdurch ist es möglich, auch Lichtschrankenmodule, Notöffnungsmodule etc. anzuschließen und eine Busverbindung zur Aufzugssteuerung zu realisieren.

Gemäß einer noch weiter vereinheitlichten Ausführungsform des erfindungsgemäßen Antriebs ist der Netztransformator als Standard-Netztransformator ausgebildet, der entsprechend in noch größeren Stückzahlen mit einem vergleichsweise geringen technologischen und wirtschaftlichen Aufwand kostengünstig herstellbar ist.

Eine Ausführungsform des Standard-Netztransformators, die eine Ausgangsleistung von 350 VA aufweist, hat sich als besonders vorteilhaft und zweckmäßig erwiesen.

Bei einer vorteilhaften Ausführungsform des erfindungsgemäßen Antriebs transformiert der Standard-Netztransformator die Netzspannung von z.B. 230 VAC auf eine Ausgangsspannung von ca. 22 VAC herunter. Die Ausgangsspannung von 22 VAC des Standard-Netztransformators ist zweckmäßig, da hierdurch sichergestellt wird, daß in dem Standard-Netztransformator nachgeschalteten Baugliedern eine Funktionskleinspannung mit sicherer Trennung von 42 V nicht überstiegen wird.

Sofern ein einen Gleichrichter, eine Stromerfassung und die Endstufe aufweisendes Leistungsteil des Steuergeräts über den Gleichrichter an eine Batterie anschließbar ist, kann bei einem Netzausfall die durch den erfindungsgemäßen Antrieb gesteuerte Aufzugsanlage für einen bestimmten Zeitraum zumindest im Notbetrieb mit verminderten Geschwindigkeiten der Aufzugstüren weiter betrieben werden.

Zur Sicherung des Microcontrollers und des ASIC gegen Spannungsüberlastungen ist es zweckmäßig, wenn das Leistungsteil eine eingangsseitig des Gleichrichters angeordnete Überspannungs-Abschaltung aufweist, die durch den Microcontroller bzw. das ASIC auslösbar ist, wenn der Microcontroller bzw. das ASIC eine überhöhte Eingangsspannung erfassen.

Für diesen Fall können der Microcontroller und das ASIC Datensicherungsmaßnahmen vornehmen und gegebenenfalls Störungsanzeigen einschalten, falls die Überspannungs-Abschaltung eine Überbrückungsleitung mit einem variablen Widerstand aufweist, über den der Microcontroller nach einer Auslösung der Überspannungs-Abschaltung weiter mit einer entsprechend dem Niveau des variablen Widerstands abgesenkten Eingangsspannung versorgbar ist.

Zur Gewährleistung eines dauerhaft geeigneten Spannungsniveaus im Steuergerät kann das Leistungsteil ein eingangsseitig des Gleichrichters angeordnetes, vorzugsweise als Gleichspannungswandler ausgebildetes Stabilisierungselement aufweisen, mittels dem die Eingangsspannung des Steuergeräts auf einem konstanten Spannungsniveau, z.B. auf einem Spannungsniveau von 34 V, stabilisierbar ist.

Sofern ein derartiges, als Gleichspannungswandler ausgebildetes Stabilisierungselement vorgesehen ist, kann bei einer weiteren vorteilhaften Ausführungsform des erfindungsgemäßen Antriebs als Standard-Netztransformator ein Bautyp vorgesehen sein, der eine Ausgangsleistung von 240 VA aufweist. Durch die Verwendung des beschriebenen Stabilisierungselements und den Einsatz des vorstehend erwähnten Standard-Netztransformators läßt sich der technologische und wirtschaftliche Aufwand für den erfindungsgemäßen Antrieb weiter reduzieren.

In einer vorteilhaften Ausführungsform des erfindungsgemäßen Antriebs kann das Leistungsteil einen Ballastschalter aufweisen, mittels dem vermieden werden kann, daß bei generatorisch arbeitendem Motor das Spannungsniveau im Steuergerät eine vorgebbare Spannungsschwelle, z.B. 40 V, übersteigt. Da bei negativen Beschleunigungen bzw. Bremsvorgängen der durch den erfindungsgemäßen Antrieb hin und her zu bewegenden Aufzugstür der Motor Energie erzeugen kann, die zu einem Spannungsanstieg innerhalb des Steuergeräts führen kann, ist es zweckmäßig, mittels des Ballastschalters unzulässig hohe Spannungen innerhalb des Steuergeräts zuverlässig auszuschließen.

Sofern der Ballastschalter unmittelbar an die Überspannungs-Abschaltung angeschlossen ist, ist es möglich, mittels des Ballastschalters in einem kürzestmöglichen Zeitraum eine Außerbetriebsetzung des Antriebs herbeizuführen.

Zur weiteren Erhöhung der Betriebssicherheit des erfindungsgemäßen Antriebs ist es vorteilhaft, wenn das Leistungsteil einen zweiten Abschaltweg aufweist, mittels dem der Motor außer Betrieb setzbar ist.

Insbesondere ist es zur Störungsvermeidung vorteilhaft, wenn der Microcontroller bzw. das ASIC mit einer Überwachungseinheit versehen sind, mittels der ein Defekt am Microcontroller bzw. am ASIC feststellbar ist, wobei dann mittels des zweiten Abschaltwegs, welcher auch an den Microcontroller bzw. ASIC angeschlossen ist, eine Außerbetriebsetzung des Motors herbeigeführt wird.

Der zweite Abschaltweg kann den Motor auch dann außer Betrieb setzen, wenn die Endstufe des Leistungsteils defekt ist, was ansonsten zu erheblichen Betriebsstörungen und -ausfällen führen könnte.

Da bei Aufzugsanlagen unterschiedliche Motortypen eingesetzt werden, die ihrerseits unterschiedlich schwere Aufzugstüren gemäß unterschiedlicher Bewegungskurven bewegen sollen, ist es für das praktisch universell einsetzbare Steuergerät des erfindungsgemäßen Antriebs vorteilhaft, wenn in ihm Motorkenndaten jedes eingesetzten Motortyps abgespeichert sind; darüber hinaus sollte das Steuergerät eine Motorerkennung aufweisen, mittels der der vom Steuergerät zu steuernde Motor hinsichtlich seines Motortyps erkennbar ist; bei Erfüllung dieser Voraussetzungen können dann innerhalb des Steuergeräts die im Steuergerät abgespeicherten Motorkenndaten, bei denen es sich z.B. um die Betriebskennlinien unterschiedlicher Motortypen handeln kann, des zu steuernden Motors diesem zugeordnet werden, so daß die Steuerung und Regelung des Motors vom Beginn an in optimaler Weise erfolgen kann.

Bei der Verwirklichung des erfindungsgemäßen Antriebs hat es sich als besonders vorteilhaft herausgestellt, wenn das Steuergerät als AT25-Steuergerät ausgebildet ist.

Die Erfindung wird anhand von Zeichnungen näher erläutert, aus denen ebenso wie aus den Unteransprüchen, auch weitere erfindungswesentliche Merkmale entnehmbar sind. Im einzelnen zeigen:
- FIG 1: das Prinzip des erfindungsgemäßen Kombinationsantriebs;
- FIG 2: eine Blockdarstellung der elektrischen Komponenten eines ersten Ausführungsbeispiels des erfindungsgemäßen Steuerantriebs und der Peripherie; und
- FIG 3: eine Blockdarstellung der elektrischen Komponenten eines zweiten Ausführungsbeispiels des erfindungsgemäßen Steuerantriebs und der Peripherie.

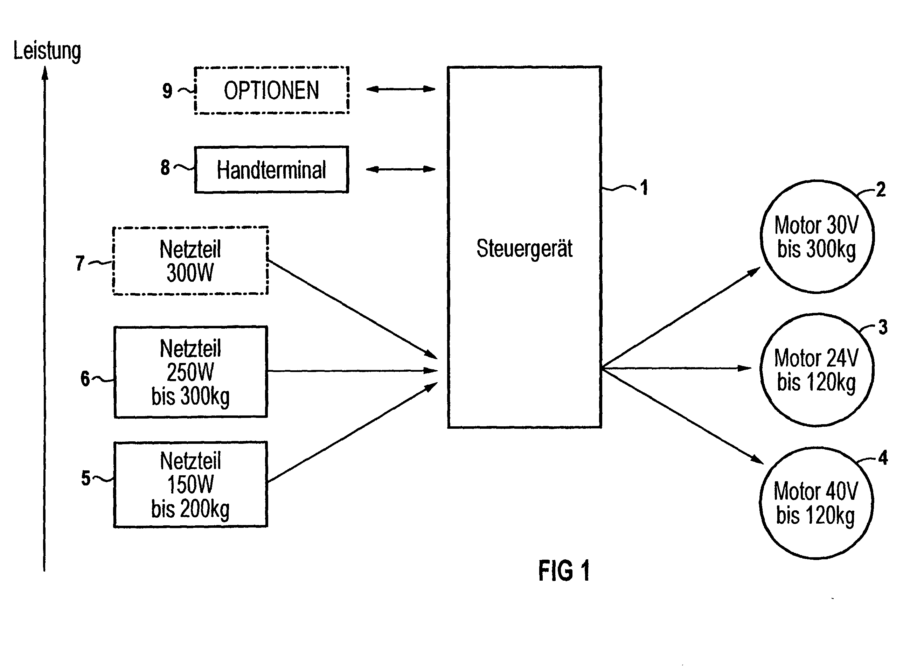

In FIG 1 bezeichnet 1 das Steuergerät, an das Motoren 2, 3 und 4 unterschiedlicher Nennspannung anschließbar sind. Die Motoren 2, 3 und 4 sind für den Antrieb unterschiedlich schwerer und mit unterschiedlichen Geschwindigkeiten arbeitender Türen bestimmt. Die Motoren werden anforderungsgerecht ausgewählt und sind nur in bezug auf die aufgenommene Antriebsleistung, nicht aber in bezug auf ihre Nennspannung, auf die Netztransformatoren 5, 6 und 7 abgestimmt. Die Netztransformatoren 5, 6 und 7 weisen unterschiedliche Ausgangsleistung auf, z.B. zwischen 150 W und 500 W, wobei insbesondere für die 150 W bis 300 W-Ausführungen aber auch für andere Leistungsgrößen ein Netztransformator verwendet werden kann, der aus einem Halogenlampen-Vorschalttransformator abgeleitet ist, aber auch ein spezielles Schaltnetzteil mit geringem Spannungsabfall bei hoher Belastung. Die Auswahl wird anforderungsgerecht vorgenommen. Erfindungsgemäß ist das Steuergerät 1 mit einem Terminal, insbesondere einem Handterminal 8 verbindbar und besitzt optional verschiedene Ein- und Ausgänge. Dies wird durch die Position 9 "Optionen" symbolisiert.

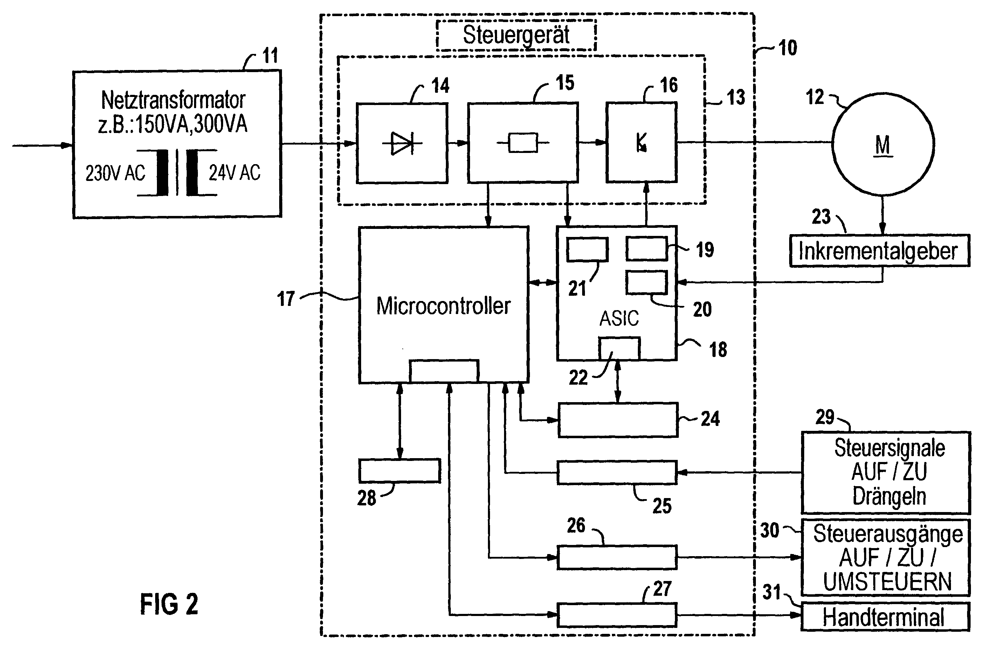

In FIG 2 bezeichnet 10 das Steuergerät als ganzes, 11 den Netztransformator, mit dem das Steuergerät mit Energie versorgt wird und 12 den mit Energie versorgten Motor zum Antrieb der Schiebetür, insbesondere einer Aufzugstür. Im Steuergerät 10 ist für die Energieversorgung des Motors 12 der Leistungsteil 13 verantwortlich, der im wesentlichen aus dem Gleichrichter 14, der Stromerfassung 15 und der Endstufe 16, insbesondere einer Endstufe mit H-Brücke, besteht. Die Stromerfassung 15 wirkt auf einen Microcontroller 17, der im wesentlichen einen A/D-Wandler, ein EPROM als Programmspeicher, ein RAM als Datenspeicher und ein EEPROM als zweiten Datenspeicher für variable Daten aufweist. Der Microcontroller 17 wirkt mit einem ASIC 18 zusammen, dessen wesentliche Bestandteile die Pulsweitenmodulationseinheit 19, der Zähler 20 für den Inkrementalgeber 23 und eine Busschnittstelle 22 sind.

Der Microcontroller 17 weist besonders vorteilhaft zusätzlich eine Überwachungseinheit 28, z.B. einen Watch-Dog auf, mit dem die wichtigen Funktionen des Microcontrollers und gegebenenfalls auch der Peripherie überwacht werden. Der Microcontroller 17 selbst ist ein kostengünstiger 8-Bit Prozessor, in dem aber lineare Zusammenhänge, z.B. zur Fahrkurvenbildung in sehr kleine Schritte unterteilt, vorteilhaft abgearbeitet werden können.

Motor 22, Inkrementalgeber 23, Zähler 20, Pulsweitenmodulationseinheit 19 und Endstufe 16 bilden vorteilhaft einen Regelkreis, mit dem die Spannungskompensation erfolgen kann. Als Führungsgröße für die Spannungskompensation dient die Drehgeschwindigkeit des Motors in Abhängigkeit von den Vorgaben des Microcontrollers. So kann die vorgegebene Fahrkurve auch bei unterschiedlichen Transformator-Ausgangsspannungen, d.h. auch bei Spannungsabfällen, eingehalten und z.B. Antriebsschwingungen vermieden werden.

Das Steuergerät 10 weist weiterhin eine Schnittstelle 24 für Erweiterungsmodule, z.B. für ein Lichtschrankenmodul, ein Notöffnungsmodul oder auch ein Businterface auf. Des weiteren ein Eingangsfilter 25, das z.B. mit einem Steuersignalgeber 29 verbunden ist. Weiterhin ein Relais 26, das mit Steuerausgängen 30 verbunden ist. Des weiteren eine Schnittstelle 27 zu einem Terminal 31, z.B. einem Handterminal.

Das Steuergerät ist in nicht gezeigter, üblicher Weise über Potentiometer parametrierbar ausgebildet, es kann jedoch ebenso über das Handterminal, dessen Verbindung die Potentiometer außer Funktion setzt, parametriert werden. Die Grundparameter des Steuergeräts sind im EPROM abgelegt, bei Inbetriebnahme werden sie in das EEPROM übertragen. Durch das Terminal können sie verändert werden, z.B. die Geschwindigkeitsrampen, die Brems- und Beschleunigungsrampen. Dazu kommen Wartezeiten, die vorgewählten Momente, etc..

Der Watch-Dog 28 überwacht über einen Microcontroller 17 hinaus auch noch die Peripherie, und zwar auf Kabelfehler etc., und kann zur Plausibilitätskontrolle der generierten Signale eingesetzt werden. Insgesamt ergibt sich ein in der Funktionalität den bisherigen Türantrieben in nichts nachstehender aber wesentlich kostengünstigerer Antrieb.

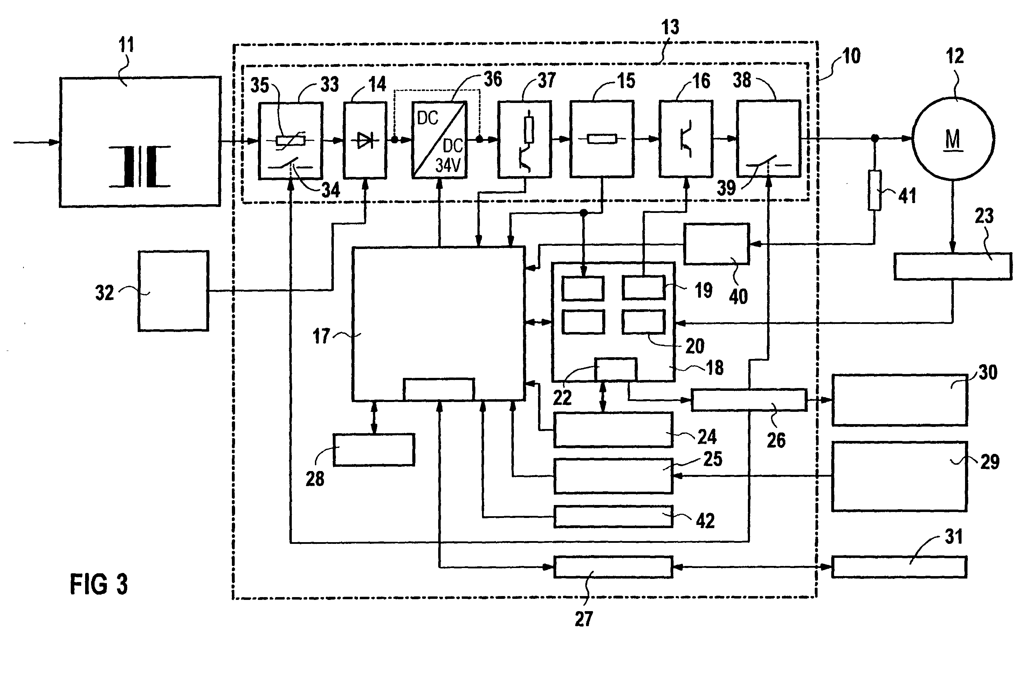

Ein in FIG 3 dargestelltes Ausführungsbeispiel des erfindungsgemäßen Antriebs für eine Aufzugstür weist grundsätzlich einen ähnlichen Aufbau auf, wie das anhand von FIG 2 bechriebene Ausführungsbeispiel. Auf eine Beschreibung der den beiden Ausführungsbeispielen gemeinsamen Teilelemente, welche einander hinsichtlich ihrer Funktion und Wirkung entsprechen, wird im folgenden verzichtet; die folgende Beschreibung bezieht sich vielmehr auf diejenigen Teilelemente des in FIG 3 dargestellten Ausführungsbeispiels, welche bei dem Ausführungsbeispiel gemäß FIG 2 nicht vorhanden sind bzw. eine weitergehende Funktion oder Wirkung aufweisen.

Bei dem in FIG 3 dargestellten Ausführungsbeispiel wird als Netztransformator ein Standard-Netztransformator 11 eingesetzt, der eine Ausgangsleistung von 350 VA aufweist und mittels dem die netzseitige Spannung von 230 VAC auf eine steuergerätseitige Spannung von 22 VAC heruntertransformierbar ist. Derartige Standard-Netztransformatoren 11 werden in sehr großen Stückzahlen auch für andere als die erfindungsgemäßen Zwecke hergestellt, so daß durch den Einsatz eines derartigen Standard-Netztransformators 11 eine erhebliche Reduzierung der für den erfindungsgemäßen Antrieb aufzuwendenden Kosten im Vergleich zu dem Ausführungsbeispiel gemäß FIG 2 erzielt werden kann.

Als ausgangsseitige, an das Steuergerät 10 anzulegende Spannung des Standard-Netztransformators 11 ist ein Spannungsniveau von 22 VAC vorgesehen, da bei diesem Ausgangsspannungsniveau auch unter Berücksichtigung von nachgeschalteten Teileinheiten, die die Ausgangsspannung beeinflussen, gewährleistet werden kann, daß in jedem Fall das steuergerätseitige Spannungsniveau unterhalb einer Funktionskleinspannung mit sicherer Trennung von 42 V verbleibt.

Bei einem Netzausfall kann das Steuergerät 10 ersatzweise mittels einer Batterie 32 mit einer Betriebsspannung versorgt werden. Die Batterie 32 stellt eine Ausgangsspannung von 24 V zur Verfügung, und ist in jedem Fall so ausgelegt, daß bei einem Netzausfall die Aufzugsanlage zumindest im Rahmen eines Notbetriebs, bei dem die Aufzugstüren mit reduzierten Geschwindigkeiten und Beschleunigungen bewegt werden, weiter betrieben werden kann. Hierzu ist die Batterie 32 an den Gleichrichter 14 des Leistungsteils 13 angeschlossen.

Bei der in FIG 3 dargestellten Ausführungsform des erfindungsgemäßen Antriebs ist im Leistungsteil 13 des Steuergeräts 10 eine Überspannungs-Abschaltung 33 vorgesehen, über die die Ausgangsspannung des Standard-Netztransformators 11 zum Gleichrichter 14 geführt wird. Die Überspannungs-Abschaltung 33 weist einen Relaisschalter 34 auf, mittels dem die Spannungszufuhr von Standard-Netztransformator 11 zum steuergerätseitigen Gleichrichter 14 unterbrechbar ist. Der Relaisschalter 34 ist mittels des Relaisblocks 26 an das ASIC 18 bzw. den Microcontroller 17 angeschlossen. Der Microcontroller 17 bzw. das ASIC 18 sind an die Stromerfassung 15 angeschlossen und überwachen entsprechend die Eingangsspannung des Steuergeräts 10. Sofern der Microcontroller 17 bzw. das ASIC 18 eine überhöhte Eingangsspannung erfassen, wird die Überspannungs-Abschaltung 33 über den an den Relaisblock 26 angeschlossenen Relaisschalter ausgelöst.

Um eine Weiterversorgung des Steuergeräts 10 auf einem niedrigeren Eingangsspannungsniveau zu gewährleisten, weist die Überspannungs-Abschaltung 33 eine Überbrückungsleitung auf, in der ein variabler Widerstand 35 angeordnet ist. Die seitens des Standard-Netztransformators 11 zur Verfügung gestellte Ausgangsspannung wird dann über diese Überbrückungsleitung bzw. diesen variablen Widerstand 35 dem Gleichrichter 14 zugeführt, wobei sich eine vom Betriebszustand des variablen Widerstands 35 abhängige Reduzierung des Eingangsspannungsniveaus des Steuergeräts 10 ergibt. Durch die Weiterversorgung des Steuergeräts 10 über diese Überbrückungsleitung der Überspannungs-Abschaltung kann auch bei einer Störung, die nach einem Übergangszeitraum zu einer vollständigen Außerbetriebsetzung des Steuergeräts 10 führt, sichergestellt werden, daß im Steuergerät 10 bzw. in dessen Microcontroller 17 während des Übergangszeitraums Daten gesichert werden können und daß seitens des Steuergeräts 10 eine Schadens- bzw. Störungsanzeige ausgelöst werden kann.

Das Leistungsteil 13 hat in der in FIG 3 dargestellten Ausführungsform ein dem Gleichrichter 14 nachgeordnetes Stabilisierungselement in Form eines Gleichspannungswandlers 36, mittels dem eine eingangsseitig an ihm anliegende Gleichspannung so beeinflußbar ist, daß ausgangsseitig immer eine Gleichspannung mit einem konstanten Spannungsniveau von 34 V zur Verfügung gestellt wird. Mit dem Gleichspannungswandler 36 können somit aufgrund von Störungen, z.B. Netzschwankungen oder dergleichen, auftretende Spannungsschwankungen kompensiert werden.

Wie sich aus der gestrichelten Linie in FIG 3 ergibt, handelt es sich bei dem Gleichspannungswandler 36 um ein optionales Bauteil. Es ist nicht unbedingt erforderlich, da bei dem Steuergerät 10 durch bereits beschriebene bzw. noch zu beschreibende Maßnahmen weitestgehend sichergestellt ist, daß Spannungsschwankungen nicht zu Störungen bzw. Schädigungen des Steuergeräts 10 führen.

Bei einer Abwandlung der in FIG 3 dargestellten Ausführungsform, wobei ein Standard-Netztransformator 11 mit einer Ausgangsleistung von 240 VA eingesetzt wird, ist ein langfristig und dauerhaft funktionssicherer Einsatz des erfindungsgemäßen Antriebs trotz der vergleichsweise niedrigen Ausgangsleistung des eingesetzten Standard-Netztransformators 11 dann möglich, wenn der beschriebene Gleichspannungswandler 36 innerhalb des Leistungsteils 13 des Steuergeräts 10 vorgesehen ist. Auch bei dieser vergleichsweise niedrigen Ausgangsleistung des Standard-Netztransformators 11 von 240 VA kann mittels des Gleichspannungswandlers 36 nämlich ein für den sicheren Be-trieb des Steuergeräts 10 geeignetes Gleichspannungsniveau von 34 V zur Verfügung gestellt werden.

Sofern die mit dem erfindungsgemäßen Antrieb bewegte Aufzugstür einer negativen Beschleunigung unterworfen bzw. abgebremst wird, ist es möglich, daß der Motor 12 als Generator arbeitet und entsprechend seinerseits das Steuergerät 10 mit einer Spannung beaufschlagt. Um zu vermeiden, daß aufgrund dieser möglichen Spannungsbeaufschlagung des Steuergeräts 10 Störungen insbesondere am Microcontroller 17 oder am ASIC auftreten, weist das Leistungsteil 13 des Steuergeräts 10 Störungen insbesondere am Microcontroller 17 oder am ASIC auftreten, weist das Leistungsteil 13 des Steuergeräts 10 einen Ballastschalter 37 auf, der in dem Fall, in dem die steuergerätseitige Spannung beispielsweise 40 V übersteigt, die Überspannungs-Abschaltung 33 auslöst, wodurch das Steuergerät 10 außer Betrieb setzbar ist.

Dem Microcontrroller 17 und mittelbar dem ASIC 18 ist die beispielsweise als Watch-Dog ausgebildete Überwachungseinheit 28 zugeordnet. Falls diese Überwachungseinheit 28 feststellt, daß im Microcontroller 17 bzw. im ASIC 18 eine Störung auftritt, ist es möglich, einen zweiten Abschaltweg 38 auszulösen, mittels dem der Motor 12 außer Betrieb setzbar ist, so daß seitens des Motors 12 keine falschen bzw. fehlerhaften Steuersignale ausgeführt werden können.

Hierzu weist der zweite Abschaltweg 38 einen Relaisschalter 39 auf, mittels dem die Energiezufuhr zum Motor 12 unterbrechbar ist und der über den Relaisblock 26 an das ASIC 18 bzw. den Microcontroller 17 angeschlossen ist.

Durch den zweiten Abschaltweg 38 wird der Motor 12 auch dann außer Betrieb gesetzt, wenn die Endstufe 16 des Leistungsteils 13 defekt ist.

Im Microcontroller 17 sind Motorkenndaten, z.B. eine Motorkennlinie, für jeden im Zusammenhang mit dem erfindungsgemäßen Antrieb eingesetzten Typ des Motors 12 abgespeichert. Um den Typ des zu steuernden bzw. zu regelnden Motors 12 sicher erkennen und auf die diesem Motor 12 zugeordneten abgespeicherten Motorkenndaten zurückgreifen zu können, weist das Steuergerät 10 eine Motorerkennung 40 auf, die einseitig über einen Widerstand 41 an die Eingangsseite des Motors 12 und an ihrer anderen Seite an den Microcontroller 17 angeschlossen ist. Jedem Motortyp der eingesetzten Motoren 12 ist ein bestimmter Widerstand 41 zugeordnet. Anhand der Charakteristika des Widerstands 41 ist die Motorerkennung 40 in die Lage versetzt, den Typ des zu steuernden bzw. regelnden Motors 12 zu erfassen. Im Microcontroller 17 können dann diejenigen Motorkenndaten abgerufen und der Regelung und Steuerung zugrundegelegt werden, die dem ermittelten Typ des Motors 12 zuzuordnen sind. Hierdurch ergibt sich von vornherein eine optimale Steuerung und Regelung des Motors 12.

Das in FIG 3 dargestellte Steuergerät 10 kann als Steuergerät von Typ AT25 ausgebildet sein.

Das Steuergerät 10 ist mittels Potentiometern 42, die an den Microcontroller 17 angeschlossen sind, parametrierbar. Eine Parametrierung ist jedoch auch über das Handterminal 31, das über die Schnittstelle 27 mit dem Microcontroller 17 verbunden ist, möglich. Sofern eine Parametrierung über das Handterminal erfolgt, wird die Verbindung zwischen den Potentiometern 42 und dem Microcontroller 17 außer Funktion gesetzt.

## Patentansprüche

1. Antrieb für eine elektrische Tür, insbesondere eine Aufzugstür, mit einem Netztransformator, einem elektronischen, programmierbaren Steuergerät und einem Elektromotor mit Inkrementalgeber und Zähler, **dadurch gekennzeichnet, daß** das Steuergerät derart als Stromwandler ausgebildet ist, daß in den für elektrische Türantriebe üblichen Leistungsgrößen, aus beliebig dimensionierten Netztransformatoren (5,6,7), beliebig dimensionierte Elektromotoren (2,3,4) auch bei abweichenden Nennspannungen anforderungsgerecht mit Energie versorgbar sind.

2. Antrieb nach Anspruch 1, **dadurch gekennzeichnet, daß** das Steuergerät (10) einen Microcontroller (17), insbesondere einen 8-Bit Microcontroller aufweist, in dem ein Programm speicher- und ablaufbar ist, das auch bei Unterschreiten der Nennspannung der von dem Steuergerät (10) angesteuerten Elektromotoren (2,3,4) für eine vorgabegerechte Bewegung der Tür sorgt.

3. Antrieb nach Anspruch 1 oder 2, **dadurch gekennzeichnet, daß** das Steuergerät (10) eine Pulsweitenmodulation PWM durchführend ausgebildet ist, so daß über eine Endstufe (16), die vorzugsweise eine H-Brücke aufweist, zusammen mit dem Inkrementalgeber (23) und dem Zähler (20) ein Regelkreis für die Türbewegung bildbar ist.

4. Antrieb nach Anspruch 1, 2 oder 3, **dadurch gekennzeichnet, daß** das Steuergerät (10) einen ASIC (18) mit einer integrierten Pulsweitenmodulationseinheit (19) zur Erzeugung der Signale für die Türregelung aufweist, der mit dem Microcontroller (17) zusammenwirkend ausgebildet ist.

5. Antrieb nach einem oder mehreren der vorhergehenden Ansprüche, **dadurch gekennzeichnet, daß** der Netztransformator (11) zumindest teilweise aus Standardkomponenten von Halogenlampen-Vorschalttransformatoren besteht.

6. Antrieb nach Anspruch 5, **dadurch gekennzeichnet, daß** die Primärwicklung des Netztransformators (11) eine Halogenlampen-Vorschalttransformator-Primärwicklung ist.

7. Antrieb nach Anspruch 5 oder 6, **dadurch gekennzeichnet, daß** das Gehäuse des Netztransformators (11) ein Halogenlampen-Vorschalttransformatorgehäuse ist.

8. Antrieb nach einem oder mehreren der vorhergehenden Ansprüche, **dadurch gekennzeichnet, daß** der Netztransformator (11) eine Steckerverbindung zum Steuergerät (10) aufweist.

9. Antrieb nach einem oder mehreren der vorhergehenden Ansprüche, **dadurch gekennzeichnet, daß** das Steuergerät (10) eine Steckerverbindung zum elektrischen Motor (12) und zum Inkrementalgeber (23) aufweist.

10. Antrieb nach einem oder mehreren der vorhergehenden Ansprüche, **dadurch gekennzeichnet, daß** das Steuergerät (10) derart ausgebildet ist, daß wahlweise 24 V-, 30 V- oder 40 V-Motoren anforderungsgerecht (Türfahrkurvenvorgabe) aus vorzugsweise 24 V abgebenden Transformatoren geregelt mit der elektrischen Türantriebsenergie versorgbar sind.

11. Antrieb nach einem oder mehreren der vorhergehenden Ansprüche, **dadurch gekennzeichnet, daß** das Steuergerät (10) derart ausgebildet ist, daß mit ihm eine softwaremäßige Kompensation von Unterspannung bei der Motorstromversorgung eines Türantriebs, insbesondere eines Aufzugtürantriebs, durchführbar ist.

12. Antrieb nach einem oder mehreren der vorhergehenden Ansprüche, **dadurch gekennzeichnet, daß** das Steuergerät (10) zum Parametrieren durch ein Terminal, insbesondere ein Handterminal (31), ausgebildet ist.

13. Antrieb nach einem oder mehreren der vorhergehenden Ansprüche, **dadurch gekennzeichnet, daß** das Steuergerät (10) Signaleingänge und Steuerausgänge zur Türperipherie, insbesondere zu einer Aufzugssteuerung aufweist.

14. Antrieb nach einem oder mehreren der vorhergehenden Ansprüche, **dadurch gekennzeichnet, daß** der Netztransformator als Standard-Netztransformator (11) ausgebildet ist.

15. Antrieb nach Anspruch 14, **dadurch gekennzeichnet, daß** der Standard-Netztransformator (11) eine Ausgangsleistung von 350 VA aufweist.

16. Antrieb nach Anspruch 14 oder 15, **dadurch gekennzeichnet, daß** der Standard-Netztransformator (11) die Netzspannung von z.B. 230 VAC auf eine Ausgangsspannung von ca. 22 VAC heruntertransformiert.

17. Antrieb nach einem der Ansprüche 1 bis 16, **dadurch gekennzeichnet, daß** ein einen Gleichrichter (14), eine Stromerfassung (15) und die Endstufe (16) aufweisendes Leistungsteil (13) des Steuergeräts (10) über den Gleichrichter (14) an eine Batterie (32) anschließbar ist.

18. Antrieb nach Anspruch 17, **dadurch gekennzeichnet, daß** das Leistungsteil (13) eine eingangsseitig des Gleichrichters (14) angeordnete Überspannungs-Abschaltung (33) aufweist, die durch den Microcontroller (17) bzw. das ASIC (18) auslösbar ist, wenn der Microcontroller (17) bzw. das ASIC (18) eine überhöhte Eingangsspannung erfassen.

19. Antrieb nach Anspruch 18, **dadurch gekennzeichnet, daß** die Überspannungs-Abschaltung (33) eine Überbrückungsleitung mit einem variablen Widerstand (35) aufweist, über den der Microcontroller (17) nach einer Auslösung der Überspannungs-Abschaltung (33) weiter mit einer abgesenkten Eingangsspannung versorgbar ist.

20. Antrieb nach einem der Ansprüche 17 bis 19, **dadurch gekennzeichnet, daß** das Leistungsteil (13) ein eingangsseitig des Gleichrichters (14) angeordnetes, vorzugsweise als Gleichspannungswandler (36) ausgebildetes Stabilisierungselement aufweist, mittels dem die Eingangsspannung des Steuergeräts (10) auf einem konstanten Spannungsniveau, z.B. auf 34 V, stabilisierbar ist.

21. Antrieb nach Anspruch 20, **dadurch gekennzeichnet, daß** sein Standard-Netztransformator (11) eine Ausgangsleistung von 240 VA aufweist.

22. Antrieb nach einem der Ansprüche 17 bis 21, **dadurch gekennzeichnet, daß** das Leistungsteil (13) einen Ballastschalter (37) aufweist, mittels dem vermeidbar ist, daß bei generatorisch arbeitendem Motor (12) das Spannungsniveau im Steuergerät (10) eine vorgebbare Spannungsschwelle, z.B. 40 V, übersteigt.

23. Antrieb nach Anspruch 22, **dadurch gekennzeichnet, daß** der Ballastschalter (37) unmittelbar an die Überspannungs-Abschaltung (33) angeschlossen ist.

24. Antrieb nach einem der Ansprüche 17 bis 23, **dadurch gekennzeichnet, daß** das Leistungsteil (13) einen zweiten Abschaltweg (38) aufweist, mittels dem der Motor (12) außer Betrieb setzbar ist.

25. Antrieb nach Anspruch 24, **dadurch gekennzeichnet, daß** der zweite Abschaltweg (38) an den Microcontroller (17) bzw. das ASIC (18) angeschlossen ist und den Motor (12) außer Betrieb setzt, wenn an einer Überwachungseinheit (28) ein Defekt am Microcontroller (17) bzw. am ASIC (18) festgestellt wird.

26. Antrieb nach Anspruch 24 oder 25, **dadurch gekennzeichnet, daß** der zweite Abschaltweg (38) den Motor (12) außer Betrieb setzt, wenn die Endstufe (16) des Leistungsteils (13) defekt ist.

27. Antrieb nach einem der Ansprüche 1 bis 26, **dadurch gekennzeichnet, daß** im Steuergerät (10) Motorkenndaten jedes eingesetzten Motortyps (2,3,4; 12) abgespeichert sind und daß das Steuergerät (10) eine Motorerkennung (40) aufweist, mittels der der vom Steuergerät (10) zu steuernde Motor (2,3,4; 12) hinsichtlich seines Motortyps erkennbar ist, so daß die im Steuergerät (10) abgespeicherten Motorkenndaten des zu steuernden Motors (2,3,4; 12) diesem zuordnungsfähig und für dessen Steuerung abrufbar sind.

28. Antrieb nach einem der Ansprüche 1 bis 27, **dadurch gekennzeichnet, daß** das Steuergerät (10) als AT25-Steuergerät ausgebildet ist.

## Claims

1. Drive for an electric door, in particular a lift door, having a power transformer, an electronic, programmable control unit and an electric motor with an incremental transducer and a counter, **characterized in that** the control unit is formed as a current transformer in such away that in terms of the output variables that are usual for electric door drives it is possible to supply energy from power transformers (5, 6, 7) that are of any dimensions to electric motors (2, 3, 4) that are of any dimensions, even with varying nominal voltages, in order to meet requirements.

2. Drive according to claim 1, **characterized in that** the control unit (10) has a microcontroller (17), in particular an 8-bit microcontroller, in which it is possible to store and run a program which, even when there is a fall below the nominal voltage of the electric motors (2, 3, 4) which are activated by the control unit (10), ensures that there is a movement of the door in accordance with what has been stipulated.

3. Drive according to claim 1 or 2, **characterized in that** the control unit (10) is designed in such a way as to carry out pulse-width modulation PWM so that it is possible to form a control loop for the door movement by way of an end stage (16), which preferably has an H-bridge, together with the incremental transducer (23) and the counter (20).

4. Drive according to claim 1, 2 or 3, **characterized in that** the control unit (10) has an ASIC (18) with an integrated pulse-width modulation unit (19) for the generation of the signals for the door control, which ASIC is formed so as to cooperate with the microcontroller (17).

5. Drive according to one or more of the preceding claims, **characterized in that** the power transformer (11) consists at least in part of standard components of halogen-lamp series transformers.

6. Drive according to claim 5, **characterized in that** the primary winding of the power transformer (11) is a halogen-lamp series transformer primary winding.

7. Drive according to claim 5 or 6, **characterized in that** the housing of the power transformer (11) is a halogen-lamp series transformer housing.

8. Drive according to one or more of the preceding claims, **characterized in that** the power transformer (11) has a plug connection to the control unit (10).

9. Drive according to one or more of the preceding claims, **characterized in that** the control unit (10) has a plug connection to the electrical motor (12) and to the incremental transducer (23).

10. Drive according to one or more of the preceding claims, **characterized in that** the control unit (10) is formed in such a way that in accordance with the requirements (door track curve specification) selectively 24 V-, 30 V- or 40 V-motors can be supplied with the electrical door-drive energy in a regulated manner from transformers which preferably emit 24 V.

11. Drive according to one or more of the preceding claims, **characterized in that** the control unit (10) is formed in such a way that with it compensation of undervoltage in terms of software can be carried out in the supply of current to the motor of a door drive, in particular a lift-door drive.

12. Drive according to one or more of the preceding claims, **characterized in that** for the purposes of parameterization the control unit (10) is developed by means of a terminal, in particular a hand-held terminal (31).

13. Drive according to one or more of the preceding claims, **characterized in that** the control unit (10) has signal inputs and signal outputs to the door peripherals, in particular to a lift control.

14. Drive according to one or more of the preceding claims, **characterized in that** the power transformer is formed as a standard power transformer (11).

15. Drive according to claim 14, **characterized in that** the standard power transformer (11) has an output of 350 VA.

16. Drive according to claim 14 or 15, **characterized in that** the standard power transformer (11) steps down the supply voltage from, for example, 230 VAC to an output voltage of approximately 22 VAC.

17. Drive according to one of claims 1 to 16, **characterized in that** a power section (13) of the control unit (10) that has a rectifier (14), current detection (15) and the end stage (16) can be connected to a battery (32) by way of the rectifier (14).

18. Drive according to claim 17, **characterized in that** the power section (13) has an overvoltage cut-off that is arranged on the input side of the rectifier (14) and which can be triggered by the microcontroller (17) or the ASIC (18) if the microcontroller (17) or the ASIC (18) detects an excessive input voltage.

19. Drive according to claim 18, **characterized in that** the overvoltage cut-off (33) has a bridging line with a variable resistor (35) by way of which the microcontroller (17), after triggering the overvoltage cut-off (33), can be further supplied with a reduced input voltage.

20. Drive according to one of claims 17 to 19, **characterized in that** the power section (13) has a stabilization element which is arranged on the input (sic) side of the rectifier (14), is preferably formed as a direct-voltage converter (36) and by means of which it is possible to stabilize the input voltage of the control unit (10) to a constant voltage level, for example to 34 V.

21. Drive according to claim 20, **characterized in that** its standard power transformer (11) has an output of 240 VA.

22. Drive according to one of claims 17 to 21, **characterized in that** the power section (13) has a ballast switch (37) by means of which it is possible to avoid a situation where when the motor (12) operates in a generative manner the voltage level in the control unit (10) exceeds a voltage threshold that can be stipulated, for example 40 V.

23. Drive according to claim 22, **characterized in that** the ballast switch (37) is connected directly to the overvoltage cut-off (33).

24. Drive according to one of claims 17 to 23, **characterized in that** the power section (13) has a second cut-off path (38) by means of which the motor (12) can be rendered inoperative.

25. Drive according to claim 24, **characterized in that** the second cut-off path (38) is connected to the microcontroller (17) and to the ASIC (18) respectively and renders the motor (12) inoperative if a monitoring unit (28) ascertains that there is a defect at the microcontroller (17) or at the ASIC (18) respectively.

26. Drive according to claim 24 or 25, **characterized in that** the second cut-off path (38) renders the motor (12) inoperative if the end stage (16) of the power section (13) is defective.

27. Drive according to one of claims 1 to 26, **characterized in that** characteristic motor data of each motor type (2,3,4; 12) that is used is stored in the control unit (10), and **in that** the control unit (10) has motor recognition (40) by means of which the motor (2,3,4; 12) that is to be controlled by the control unit (10) can be recognized with regard to its motor type so that the characteristic motor data, which is stored in the control unit (10), of the motor (2,3,4; 12) that is to be controlled is capable of being associated with the latter and can be retrieved for the control thereof.

28. Drive according to one of claims 1 to 27, **characterized in that** the control unit (10) is formed as an AT25-control unit.

## Revendications

1. Dispositif d'entraînement pour une porte électrique, notamment pour une porte d'ascenseur, comportant un transformateur d'alimentation, un appareil de commande électronique programmable et un moteur électrique à générateur d'incréments, **caractérisé en ce que** l'appareil de commande est réalisé en transformateur de courant de telle manière que des moteurs (2, 3, 4) électriques dimensionnés de manière quelconque peuvent être alimentés en énergie, conformément à ce qui est exigé, par des transformateurs (5, 6, 7) d'alimentation dimensionnés de manière quelconque, même en cas de tensions nominales qui varient.

2. Dispositif d'entraînement suivant la revendication 1, **caractérisé en ce que** l'appareil (10) de commande comporte un microcontrôleur (17), notamment un microcontrôleur à 8 bits, dans lequel il peut être mémorisé et déroulé un programme qui assure un déplacement conforme à ce qui est prescrit, même lorsque l'on est en-dessous de la tension nominale des moteurs (2, 3, 4) électriques commandés par l'appareil (10) de commande.

3. Dispositif d'entraînement suivant la revendication 1 ou 2, **caractérisé en ce que** l'appareil (10) de commande est réalisé de manière à effectuer une modulation PWM de largeur d'impulsion, si bien qu'il peut être formé un circuit de régulation pour le déplacement de la porte par l'intermédiaire d'un étage (16) d'extrémité, qui comporte de préférence un pont H, conjointement avec le générateur (23) d'incréments et le compteur (20).

4. Dispositif d'entraînement suivant la revendication 1, 2 ou 3, **caractérisé en ce que** l'appareil (10) de commande comporte un ASIC (18) qui a une unité (19) intégrée de modulation de largeur d'impulsion pour la production des signaux pour la régulation de la porte et qui est réalisé de manière à coopérer avec le microcontrôleur (17).

5. Dispositif d'entraînement suivant l'une ou plusieurs des revendications précédentes, **caractérisé en ce que** le transformateur (11) d'alimentation est constitué au moins en partie de composants normalisés de transformateurs de ballast de lampes à halogène.

6. Dispositif d'entraînement suivant la revendication 5, **caractérisé en ce que** l'enroulement primaire du transformateur (11) d'alimentation est un enroulement primaire de transformateur de ballast de lampes à halogène.

7. Dispositif d'entraînement suivant la revendication 5 ou 6, **caractérisé en ce que** le boîtier du transformateur (11) d'alimentation est un boîtier de transformateur de ballast de lampes à halogène.

8. Dispositif d'entraînement suivant l'une ou plusieurs des revendications précédentes, **caractérisé en ce que** le transformateur (11) d'alimentation comporte une liaison par enfichage avec l'appareil (10) de commande.

9. Dispositif d'entraînement suivant l'une ou plusieurs des revendications précédentes, **caractérisé en ce que** l'appareil (10) de commande comporte une liaison par enfichage avec le moteur (12) électrique et avec le générateur (23) d'incréments.

10. Dispositif d'entraînement suivant l'une ou plusieurs des revendications précédentes, **caractérisé en ce que** l'appareil (10) de commande est réalisé de telle manière que au choix des moteurs de 24 V, 30 V ou 40 V peuvent être alimentés conformément à ce qui est exigé (prescription de courbe de déplacement de porte) en l'énergie électrique d'entraînement de porte, en étant régulé de préférence par des transformateurs fournissant 24 V.

11. Dispositif d'entraînement suivant l'une ou plusieurs des revendications précédentes, **caractérisé en ce que** l'appareil (10) de commande est réalisé de manière à pouvoir effectuer par cet appareil une compensation en logiciel de sous-tension lors de l'alimentation en courant du moteur d'un dispositif d'entraînement de porte, notamment d'un dispositif d'entraînement de porte d'ascenseur.

12. Dispositif d'entraînement suivant l'une ou plusieurs des revendications précédentes, **caractérisé en ce que** l'appareil (10) de commande est réalisé pour le paramétrage par un terminal, notamment par un terminal (31) manuel.

13. Dispositif d'entraînement suivant l'une ou plusieurs des revendications précédentes, **caractérisé en ce que** l'appareil (10) de commande comporte des entrées de signaux et des sorties de signaux vers la périphérie de la porte, notamment vers une commande d'ascenseur.

14. Dispositif d'entraînement suivant l'une ou plusieurs des revendications précédentes, **caractérisé en ce que** le transformateur d'alimentation est réalisé en transformateur (11) d'alimentation normalisé.

15. Dispositif d'entraînement suivant la revendication 14, **caractérisé en ce que** le transformateur (11) d'alimentation normalisé a une puissance de sortie de 350 VA.

16. Dispositif d'entraînement suivant la revendication 14 ou 15, **caractérisé en ce que** le transformateur (11) d'alimentation normalisé abaisse la tension du secteur de par exemple 230 VAC à une tension de sortie d'environ 22 VAC.

17. Dispositif d'entraînement suivant l'une des revendications 1 à 16, **caractérisé en ce qu'**une partie (13) de puissance de l'appareil (10) de commande, comportant un redresseur (14), une détection (15) de courant et l'étage (16) d'extrémité, peut être raccordée à une batterie (32) par l'intermédiaire du redresseur (14).

18. Dispositif d'entraînement suivant la revendication 17, **caractérisé en ce que** la partie (13) de puissance comporte une déconnexion (33) en cas de surtension, qui est montée côté entrée du redresseur (14) et qui peut être déclenchée par le microcontrôleur (17) ou l'ASIC (18) si le microcontrôleur (17) ou l'ASIC (18) détecte une tension d'entrée surélevée.

19. Dispositif d'entraînement suivant la revendication 18, **caractérisé en ce que** la déconnexion (33) en cas de surtension comporte une ligne de shuntage qui a une résistance (35) variable et par l'intermédiaire de laquelle le microcontrôleur (17) peut être encore alimenté en une tension d'entrée abaissée après un déclenchement de la déconnexion (33) en cas de surtension.

20. Dispositif d'entraînement suivant l'une des revendications 17 à 19, **caractérisé en ce que** la partie (13) d'entrée comporte un élément de stabilisation qui est monté côté entrée du redresseur, qui est réalisé de préférence en transformateur (36) de tension continue et au moyen duquel la tension d'entrée de l'appareil (10) de commande peut être stabilisée à un niveau de tension constant, par exemple à 34 V.

21. Dispositif d'entraînement suivant la revendication 20, **caractérisé en ce que** son transformateur (11) d'alimentation normalisé a une puissance de sortie de 240 VA.

22. Dispositif d'entraînement suivant l'une des revendications 17 à 21, **caractérisé en ce que** la partie (13) de puissance comporte un interrupteur (37) de ballast, au moyen duquel il peut être empêché que le niveau de tension dans l'appareil (10) de commande ne soit supérieur à un seuil de tension pouvant être prescrit, par exemple 40 V, dans un moteur (12) fonctionnant en générateur.

23. Dispositif d'entraînement suivant la revendication 22, **caractérisé en ce que** l'interrupteur (37) de ballast est raccordé directement à la déconnexion (33) en cas de surtension.

24. Dispositif d'entraînement suivant l'une des revendications 17 à 23, **caractérisé en ce que** la partie (13) de puissance comporte une deuxième voie (38) de déconnexion, au moyen de laquelle le moteur (12) peut être mis hors service.

25. Dispositif d'entraînement suivant la revendication 24, **caractérisé en ce que** la deuxième voie (38) de déconnexion est raccordée au microcontrôleur (17) et à l'ASIC (18) et met le moteur (12) hors service si un défaut est constaté sur une unité (28) de surveillance sur le microcontrôleur (17) ou l'ASIC (18).

26. Dispositif d'entraînement suivant la revendication 24 ou 25, **caractérisé en ce que** la deuxième voie (38) de déconnexion met le moteur (12) hors service si l'étage (16) d'extrémité de la partie (13) de puissance est défectueux.

27. Dispositif d'entraînement suivant l'une des revendications 1 à 26, **caractérisé en ce qu'**il est mémorisé dans l'appareil (10) de commande des données caractéristiques de moteur de chaque type (2, 3, 4 ; 12) de moteur utilisé et **en ce que** l'appareil (10) de commande comporte une reconnaissance (40) de moteur au moyen de laquelle le moteur (2, 3, 4 ; 12) à commander par l'appareil (10) de commande peut être reconnu du point de vue de son type de moteur, si bien que les données caractéristiques mémorisées dans l'appareil (10) de commande du moteur (2, 3, 4 ; 12) à commander peuvent lui être associées et peuvent être appelées pour sa commande.

28. Dispositif d'entraînement suivant l'une des revendications 1 à 27, **caractérisé en ce que** l'appareil (10) de commande est réalisé en appareil de commande AT25.
